# EUROPEAN PATENT APPLICATION

(11) **EP 4 681 987 A1**
(43) Date of publication of application: **21.01.2026**
(21) Application number: 22965374.6
(22) Date of filing: 14.11.2022
(51) Int. Cl.: B60P 1/43

(54) **ADJUSTABLE AUTOMATED APPARATUS FOR LOADING MOTORCYCLES AND LOADS**

(71) Applicant: De Costa, Luiz Henrique, 61122 (IT)
(72) Inventor: De Costa, Luiz Henrique, 61122 (IT)
(74) Representative: Benedetti, Gianluca
(86) International application number: PCT/BR2022/050440
(87) International publication number: WO 2024/103130

(57) **Abstract**

The present utility model relates to an automatic ramp for loading and transporting motorcycles and loads, which has a system that allows the adjustment of the length of the base and the height of the rear part of the foldable platform, thus making it possible to adapt said ramp to the size of the body of any motor vehicle with space for loads. or to a fixed base with restricted space. Such an apparatus can be used in a flexible manner; when installed on a pickup truck, it can be used with the cover of the pickup open or closed, and when used in other spaces, the height of the rear part of the apparatus can be adjusted, making it possible to increase the free space under the foldable platform. A reversal system is provided that propels the platform away from the apparatus automatically by actuation of a motor unit. Said automatic apparatus is made up of a motor unit. an adjustable base assembly. a couplable adjustable tilting assembly, a main tray assembly, a foldable platfoml assembly, and an automatic reversal system, and further comprises a trolley assembly with support for a motorcycle wheel, and a couplable assembly for a variety of loads, which make it versatile to use.

## Description

### Field of the Invention

The present utility model refers to an automated equipment for loading and unloading motorcycles and varied loads, being foldable, and adjustable concerning its length and height. It possesses a tilting system with inferior propulsion that does not interfere with the width of the cargo and an automated reversing system. Such equipment can be installed in motor vehicles with space for cargo, or on a fixed base, possessing an automated and safe system for loading and unloading motorcycles and cargo.

### Background

The service segment for removing motorcycles and general products using pick-ups and other utility vehicles has been growing constantly. The highly competitive market in this segment requires service providers to have quality and a differential in their service. The difficulty in loading motorcycles and cargo safely and practically is one of the main conflicts found in this service sector.

The acquisition of specialized equipment is an alternative, but the models currently found on the market are limited to specific vehicle models or spaces, considering that they are custom-made according to the vehicle bodies or do not have adjustments to their length and height for allocation in a specific location with space limitations. Likewise, they do not have fully automated loading and unloading systems, requiring the application of human force in parts of these processes.

In addition, users who load their motorcycles and other utensils in pick-ups privately encounter the same difficulties, since the equipment available on the market is not flexible in terms of its length and height, and thus, when acquiring automated equipment, it ends up being limited to the size of the vehicle body for which it was manufactured, not serving in other vehicles with different dimensions or in smaller spaces.

### Object of the invention and brief description of the invention

The said utility model aims to enable the user to have flexibility in using their equipment in motor vehicles with space for loads, or in a fixed base with space restrictions, such as in showcases or displays of motorcycles and other loads. The possibility of folding the equipment out of use, adjusting the length of the base and the height of the rear of the folding platform, while still maintaining the automated system, are the differentials of this utility model.

The possibility of adjusting the equipment in its length and height, and still being folded out of use, provides the user with equipment that can be installed in another motor vehicle with space for loads and with different dimensions and still maintain its operating characteristics. In fixed bases, the length and height adjustment help to allocate the equipment in small areas, providing elevation of the rear of the equipment, ideal for exhibitors, and can still fold it out of use, reducing the space occupied by it.

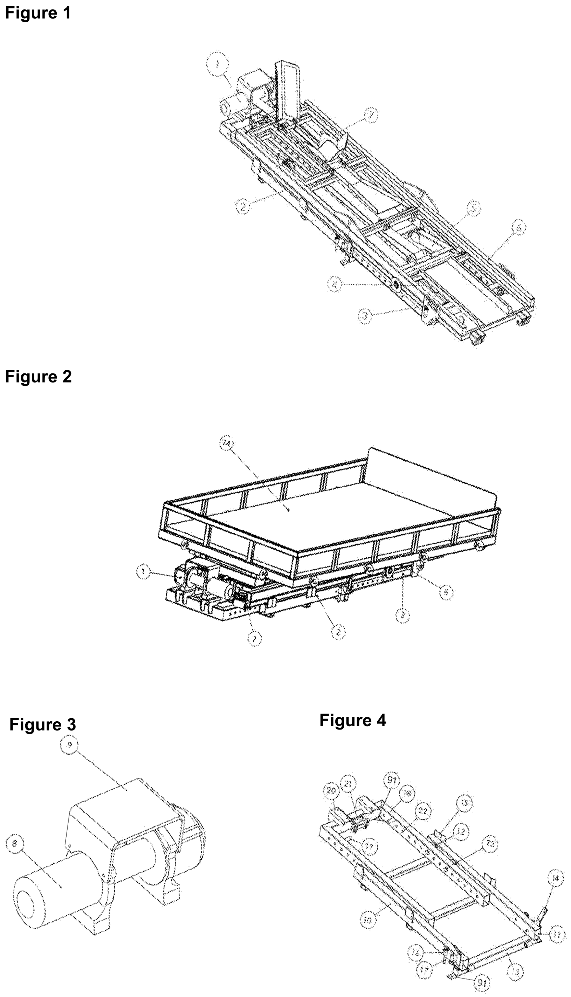

The equipment allows versatility in its functionality, since it has a set of trolley (7) to carry motorcycles and a load trolley attachable (Figure 2), which allow the loading of various types of loads in an automated and adjustable way. It also has the flexibility of use mode, being able to raise part of the folding platform assembly (6) using the adjustable tilting assembly (5), or without attaching it, thus using the equipment in its flat form.

In addition, it has a set of traction spring (4), which associated with the rest of the equipment, dispenses the use of human force in the process of unloading loads, since the folding platform assembly (6) is ejected in an automated way.

### Brief Description of the Drawings

Figure 1 is an isometric view of the equipment assembled for loading motorcycles, comprising a motor unit (1), an adjustable base assembly (2), a main drawer assembly (3), a traction spring assembly (4), an adjustable tilting assembly (5), a folding platform assembly (6) and a trolley assembly (7).
Figure 2 is an isometric view of the equipment assembled with the attachable load platform assembly (74) positioned and fixed to the trolley assembly (7).
Figure 3 is a detailed view of the motor unit (1) composed of an electric winch (8) and an upper reinforcement handle (9).
Figure 4 is a broad view of the adjustable base assembly (2), containing a base with drawer housings (10), drawer housings (11), threaded bushings for adjusting the length of the base (12), an lifting crossbar with coupling bushings (13), vertical side guides (14), horizontal side guides (15), support tubes (16) for allocating the locking pins (17), a frame adjustable motor unit support (18), an end stop (19), motor unit supports (20), a support for fixing the propulsion elements (21), holes for adjustment (22) and base fixing points (91).
Figure 5 is a broad view of the main drawer assembly (3), containing a drawer structural crossbar (23), fitting profiles (24) with holes for adjustment (22) and allocation of the locking pins (17), main platform guides (25) and supports with bearings (26).
Figure 6 is a view of the adjustable tilting assembly (5), containing a tilting lifting frame (27) and an tilting height adjustment drawer (28).
Figure 7 is a detailed view of the tilting lifting frame (27), composed of a tubular structure of the lifting frame (29) that contains lifting frame connection terminals (30), locking holes (31) and housings (32) for allocating the tilting height adjustment drawer (28), a roller support (33) and a propulsion roller (34).
Figure 8 is a detailed view of the tilting height adjustment drawer assembly (28), composed of a main drawer structure (35) with holes for adjustment (22), compression spring supports (36), compression springs (39), axles (37) and lateral guides/limiters with rollers (38).
Figure 9 is a view of the folding platform assembly (6) composed of a tubular structure of the platform (40) with trolley profiles/guides (41) and platform hinges (43), automatic lock positioners (42), rear tire base (44), wheel supports (45), wheels (46), housings for the folding platform fasteners (47) and tilting position adjustment tube (48).
Figure 10 is a front view of the folding platform assembly (6) detailing the platform roller supports (49), platform rollers (50), end stop pins (51), a support for the traction element of the spring assembly (52), and trolley stops (54) with roller supports (53).
Figure 11 is a broad view of the trolley assembly (7), being composed of a tubular structure of the trolley (55), a wheel lock articulator (56) with axle housing tube (58), a position regulator (57), a traction element support (59), a folding front support (60) with hinges of the front support (61) fixed to a hinge support (62), an access ramp (63) and an automatic lock (64).
Figure 12 is a detailed view of the automatic lock (64) composed of locks with spring support (65), a compression spring (66), a lock base (67), a lock axle (68) and a lock fixing element (69).
Figure 13 is a view in three positions of the process of adjusting the length of the adjustable base assembly (2).
Figure 14 is a view in three positions of the process of adjusting the length of the main drawer assembly (3) coupled to the adjustable base assembly (2).
Figure 15 is a view in three positions of the tilting process of the adjustable tilting assembly (5) with the propulsion element (70) and the tilting lifting frame (27).
Figure 16 is a view of the arrangement process in three positions tilting height adjustment drawer (28) coupled to the tilting lifting frame (27).
Figure 17 is a view in two positions of the traction spring assembly (4) allocated in the main drawer assembly (3).
Figure 18 is a broad view of the equipment assembled and in the boarding position, demonstrating the movement of the wheel lock articulator (56).
Figure 19 is a view of the equipment assembled in its operating mode without the adjustable tilting assembly (5), in steps of the movement resulting from the actuation of the motor unit (1) associated with the traction element (71) leading to raising or lowering the trolley assembly (7) and the folding platform assembly (6).
Figure 20 is a detailed isometric front view of the equipment assembled in its operating mode without the adjustable tilting assembly (5), when reaching the position where the folding platform assembly (6) meets the end stop (19).
Figure 21 is a view of the equipment assembled in its operating mode with the adjustable tilting assembly (5) coupled to the adjustable base assembly (2), in steps of the movement caused by the actuation of the motor unit (1) associated with the traction element (71) and the propulsion element (70), resulting in the rear elevation of the folding platform assembly (6).
Figure 22 is an isometric rear view of the equipment assembled in its operating mode with the adjustable tilting assembly (5) coupled to the adjustable base assembly (2), with the lifting process completed.
Figure 23 is an isometric front view of the equipment assembled in its operating mode with the adjustable tilting assembly (5) coupled to the adjustable base assembly (2), with the lifting process completed.
Figure 24 is a side view of the equipment assembled, in its operating mode with the adjustable tilting assembly (5) coupled to the adjustable base assembly (2), with the lifting process completed and with the closing movement of the main drawer assembly (3).
Figure 25 is a side view of the equipment assembled, with the adjustable tilting assembly (5) coupled to the adjustable base assembly (2), with the folding front support (60) closed and movement of the folding platform assembly (6) until it is fully folded.
Figure 26 is an isometric rear view of the equipment assembled with the adjustable tilting assembly (5) coupled to the adjustable base assembly (2), fully folded and with the main drawer assembly (3) fully retracted.
Figure 27 is an isometric front view of the equipment assembled with the adjustable tilting assembly (5) coupled to the adjustable base assembly (2), fully folded and with the main drawer assembly (3) fully retracted.
Figure 28 is a view of the equipment assembled in its operating mode without the adjustable tilting assembly (5), in folding movement of the folding platform assembly (6).
Figure 29 is a view of the equipment assembled and with the folding platform assembly (6), in its operating mode without the adjustable tilting assembly (5), in closing movement of the main drawer assembly (3).
Figure 30 is a side view of the equipment assembled, in its operating mode without the adjustable tilting assembly (5), fixed to a body of a motor vehicle with a body.
Figure 31 is an isometric rear view of the equipment assembled in its operating mode with the adjustable tilting assembly (5) coupled to the adjustable base assembly (2), fixed to a bench with a length smaller than the equipment.
Figure 32 is an isometric side view of the equipment out of use folded in a body of a motor vehicle.
Figure 33 is a side view of the equipment assembled, in its operating mode with the adjustable tilting assembly (5) coupled, fixed to a body of a motor vehicle with the lid closed during the use of the equipment.
Figure 34 is a side view of the equipment assembled, in its operating mode with the adjustable tilting assembly (5) coupled, fixed to a body of a motor vehicle with the lid closed during the use of the equipment with a loaded motorcycle.
Figure 35 is a detailed view of the adjustable base assembly (2) with the adjustable tilting assembly (5) coupled through a fixing element (73) and with the propulsion element (70) positioned.
Figure 36 is a view of part of the equipment assembly process, where the folding platform assembly (6) is positioned on the base assembly adjustable (2) with the main drawer assembly (3) and adjustable tilting assembly (5) already coupled, demonstrating the placement of the propulsion element (70) in its respective supports.
Figure 37 is a top lateral isometric view of the attachable load platform assembly (74), being composed of a load base (75), a load structural frame (77) with lateral grids (76) and with lashing points (78) on the sides and on the front, and an ascent ramp (79) for general loads.
Figure 38 is a top lateral isometric view of the attachable load platform assembly (74) without the load base (75), detailing in the load structural frame (77) the wheels of the structural frame (80), the ascent ramp hinges (81), the lower support roller (82) and the lateral bushings of the hinge (85). It also shows the coupling frame (83) fixed to the load structural frame (77) through the lateral bushings of the hinge (85) and coupled to the trolley assembly (7) through the coupling locks (84).
Figure 39 is a lateral isometric view of the attachable load platform assembly (74) without the load base (75), detailing in the load structural frame (77) the position of the lower support roller (82) and demonstrating that it will travel the rear tire base (44) of the folding platform assembly (6) during the ascent and descent process.
Figure 40 is a top view of the attachable load platform assembly (74) without the load base (75), demonstrating the position that the assembly occupies on the rear tire base (44) of the folding platform assembly (6) when it is loaded on the equipment.
Figure 41 is a rear lateral isometric view of the attachable load platform assembly (74) coupled to the adjustable automated equipment for loading motorcycles and loads.
Figure 42 is a lateral view of the adjustable automated equipment for loading motorcycles and loads with the attachable load platform assembly (74) ready for use.
Figure 43 is a detailed view of the coupling frame (83) being composed of central bushings of the hinge (86) and by the fixing/tightening elements (87) that will hold the coupling locks (84).
Figure 44 is a detailed view of the trolley assembly (7) without the folding front support (60), without the wheel lock articulator (56) and without the access ramp (63) and with the coupling frame (83) fixed to the hinge support (62) through fixing elements (73), preferably screws. It also demonstrates the hinge axle (88) that will be used to fix the attachable load platform assembly (74).
Figure 45 is a detailed bottom view of the trolley assembly (7) with the coupling frame (83) fixed and attached to its structure.
Figure 46 is a detailed rear isometric view of the attachable load platform assembly (74), demonstrating the locking system of the ascent ramp (79) through the ascent ramp fixing handle (89) and the ascent ramp fixing points (90).
Figure 47 is a detailed rear isometric view of the attachable load platform assembly (74), with the ascent ramp (79) open and ready for loading loads.
Figure 48 is an isometric view of the traction spring assembly (4) demonstrating the traction element of the spring assembly (72).
Figure 49 is an isometric view of the traction spring assembly (4) without the assembly covers, demonstrating its internal part.

### Detailed description of the invention

The adjustable automated equipment according to the described figures, is driven by a motor unit (1), preferably an electric winch (8) adapted with an upper reinforcement handle (9) designed to accommodate the entire extension of the traction element (71) during the loading and unloading process. The motor unit (1) must be fixed to the motor unit supports (20) of the adjustable base assembly (2) with a fixing element (73), preferably screws.

The adjustable base assembly (2) has an adjustable motor unit support frame (18) with adjustment holes (22) and a base with drawer housings (10) and threaded bushings for adjusting the length of the base (12), which allow the length of the base to be adjusted (Figure 4). Once positioned at the desired length, the adjustable motor unit support frame (18) and the base with drawer housings (10) must be fixed together with fixing elements (73), preferably screws, using the adjustment holes (22) and the threaded bushings for adjusting the length of the base (12).

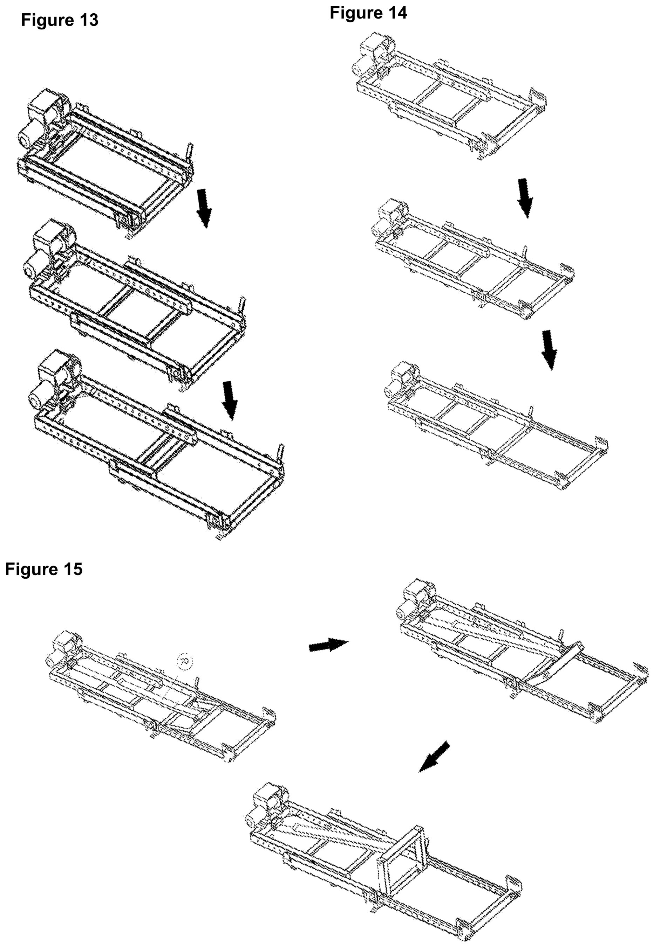

In Figure 13, three positions of the length adjustment process of the adjustable base assembly (2) can be observed, thus allowing the same equipment to be allocated in spaces with different lengths.

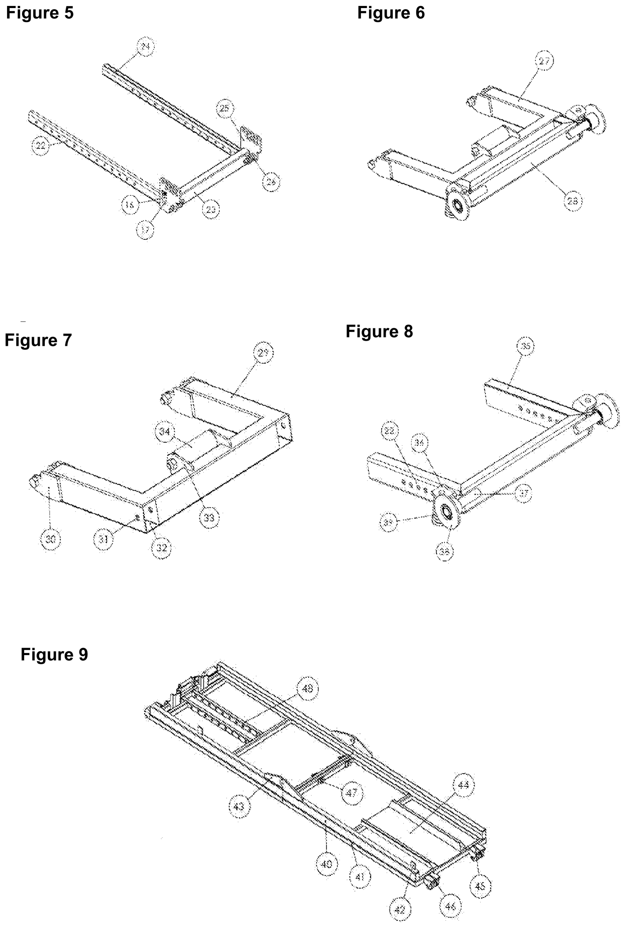

The total length of the base can also be extended using the main drawer assembly (3). This assembly has fitting profiles (24) with adjustment holes (22), which together with the structural drawer crossbar (23), form the structure of the drawer (Figure 5). The length adjustment of the main drawer assembly (3) in relation to the adjustable base assembly (2) occurs when the fitting profiles (24) are allocated inside the drawer housings (11) that make up the ends of the base with drawer housings (10).

After positioning it according to the desired length, the locking of the main drawer assembly (3) occurs when placing the locking pins (17) in the adjustment holes (22) as shown in Figure 14, where the length adjustment process of the main drawer assembly (3) coupled to the adjustable base assembly (2) is observed in three different positions. The locking pins (17), when not in use, must be allocated in the support tubes (16), thus preventing the pins from becoming loose.

The main drawer assembly (3) will serve as structural support for part of the folding platform assembly (6). Associated with the adjustable base assembly (2), which has as one of its components the lifting crossbar with coupling bushings (13), they will perform the function of support, thus allowing the weight deposited on the equipment to be entirely on the adjustable base assembly (2). The adjustable base assembly (2) must be fixed to the desired surface, such as the body of a vehicle, through the base fixing points (91) using fixing elements (73), preferably screws.

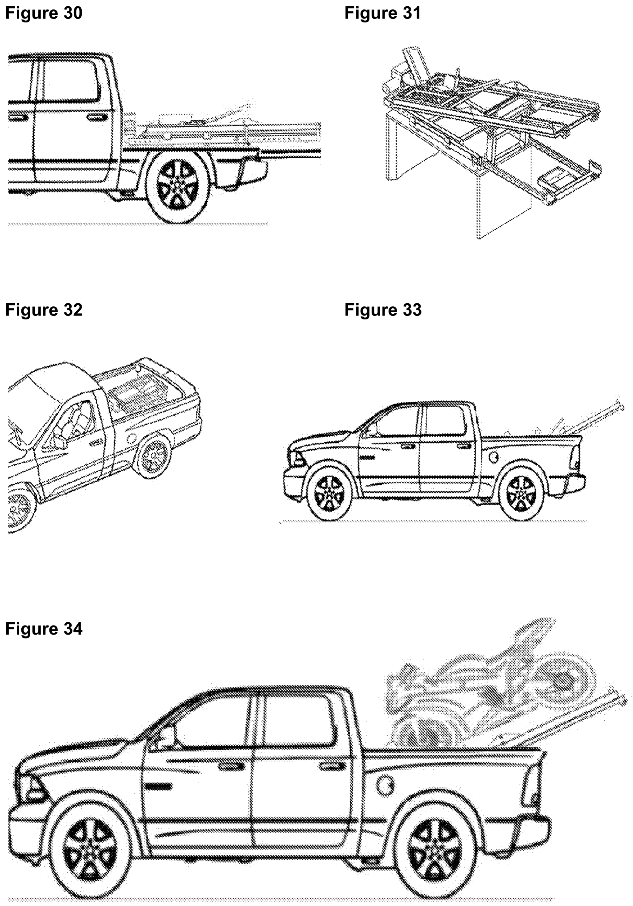

In this way, the adjustable base assembly (2) supports the weight of the load allocated on the equipment without supporting or depending on the cover when used in a pick-up truck (Figure 30) or without needing a structure that supports the entire extension of the equipment during its use in locations with limited space (Figure 31).

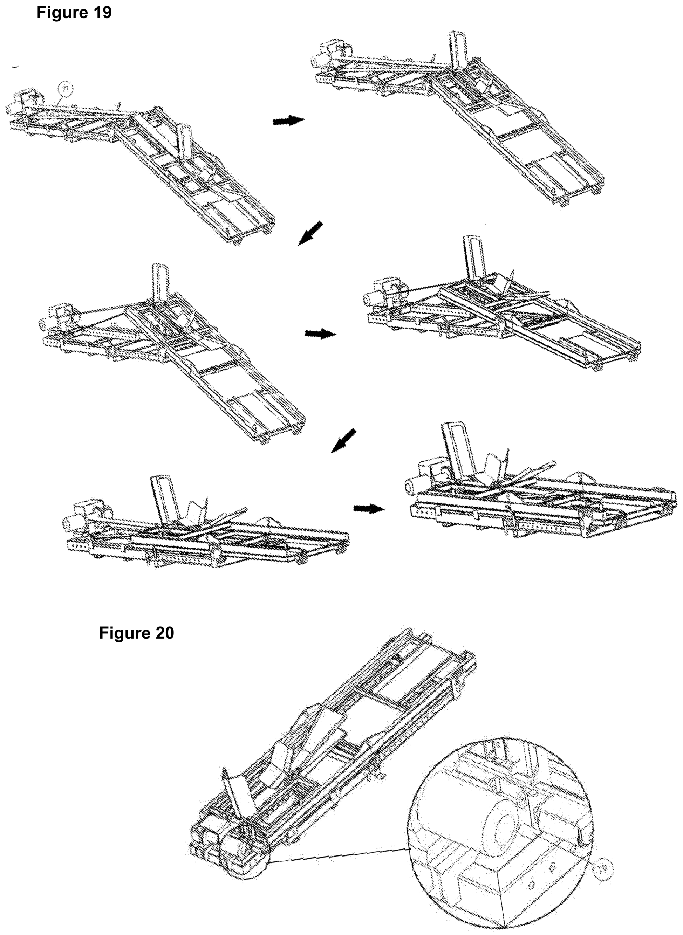

The said equipment has two forms of use, with the adjustable tilting assembly (5) coupled, or without the adjustable tilting assembly (5) coupled. Without having the adjustable tilting assembly (5) coupled, or removing the fixing element (73) from the propulsion element (70) that is fixed to the tilting position adjustment tube (48), the folding platform assembly (6) remains flat after loading, with part of the tubular structure of the platform (40) supported on the main drawer assembly (3) during the use of the equipment as demonstrated in Figure 19.

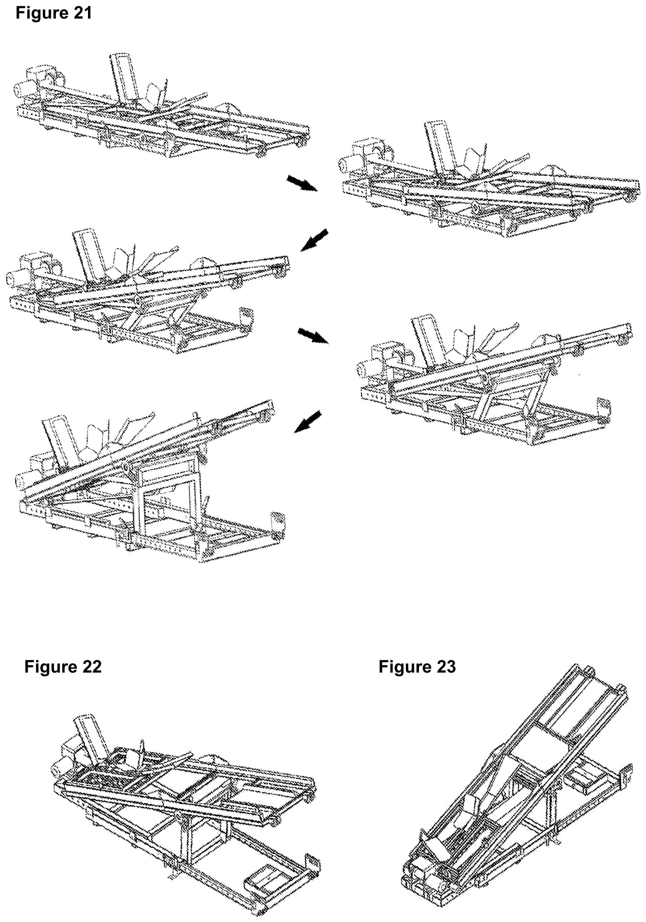

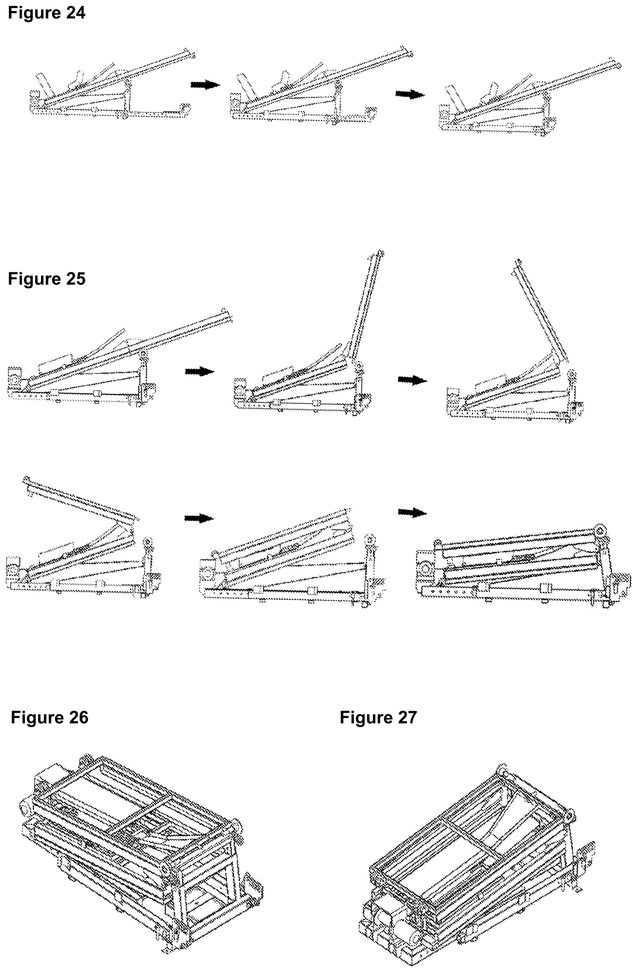

Seeking to optimize the use of space, considering that the inclination reduces the space occupied by the equipment and its load, it is possible to couple the adjustable tilting assembly (5) and the propulsion element (70) to the adjustable base assembly (2) and to the folding platform assembly (6). Thus, during loading, part of the folding platform assembly (6) is raised, as demonstrated in Figure 21, which keeps its weight supported on the adjustable tilting assembly (5), allowing the closing of the main drawer assembly (3) as represented in Figure 24.

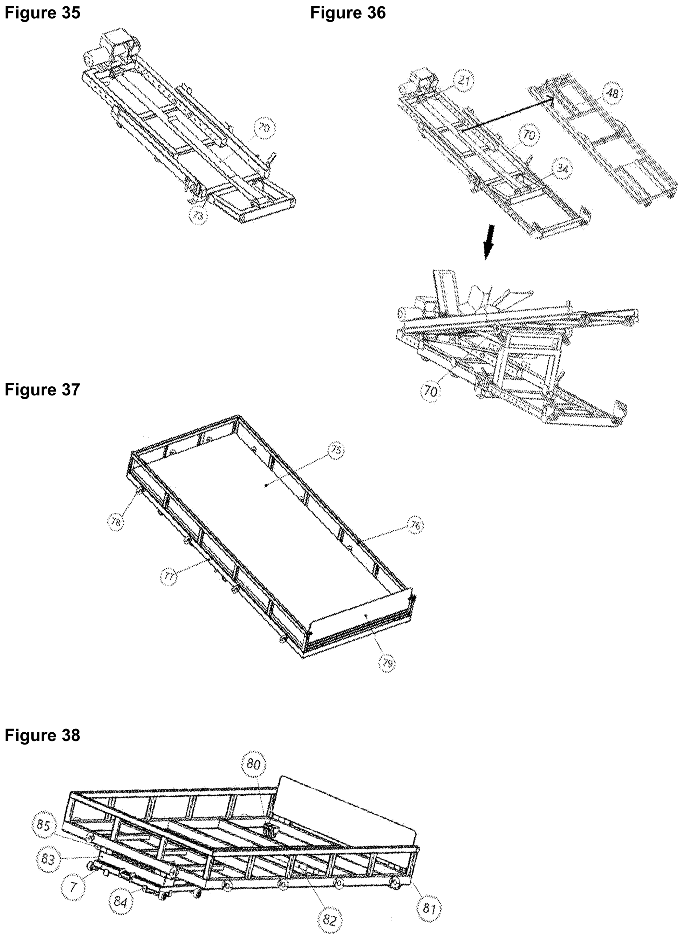

As shown in Figure 35, the coupling of the adjustable tilting assembly (5) to the adjustable base assembly (2) occurs by fixing the connection terminals of the lifting frame (30), which are located at the ends of the tubular structure of the lifting frame (29), to the lifting crossbar with coupling bushings (13) in the adjustable base assembly (2), using a fixing element (73), preferably screws.

As shown in Figure 36, the operation of the propulsion system occurs by fixing one of the ends of the propulsion element (70) to the fixing support of the propulsion element (21) in the adjustable base assembly (2), passing between the propulsion roller (34) and the tubular structure of the lifting frame (29), the other end being fixed, preferably with screws, to the tilting position adjustment tube (48) of the folding platform assembly (6).

The tilting position adjustment tube (48) of the folding platform assembly (6) has adjustments that allow, after adjusting the length of the adjustable base assembly (2), adjusting the final position of the tilting lifting frame (27), thus allowing the equipment to be tilted at different angles and measurements.

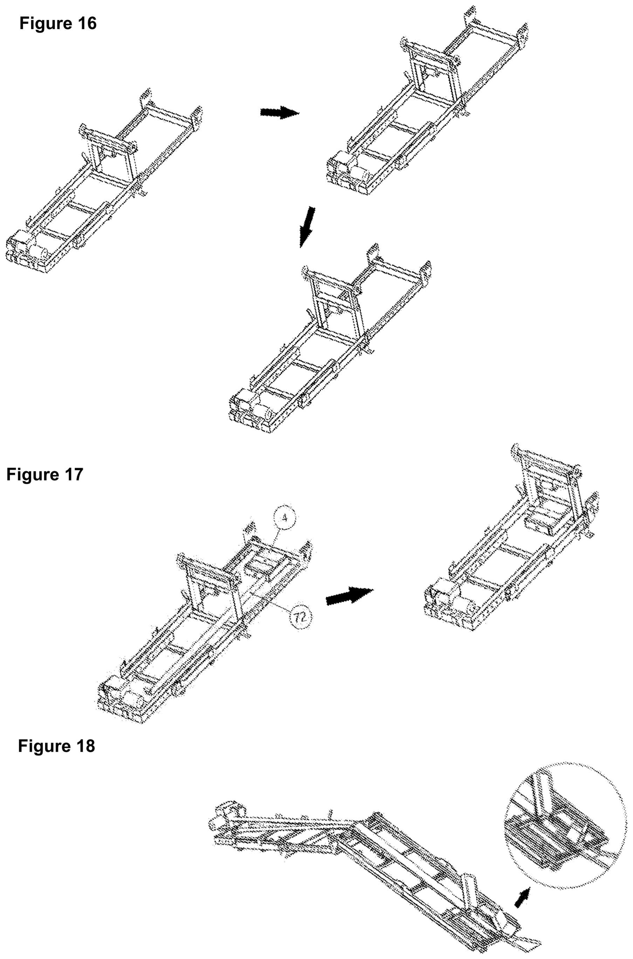

The tilting lifting frame (27) has housings (32) in which the main structure of the drawer (35) must be fitted. After defining the desired position, the tilting height adjustment drawer (28) must be fixed to the tilting lifting frame (27) through the adjustment holes (22) of the main structure of the drawer (35) and the locking holes (31) of the tubular structure of the lifting frame (29), using a fixing element (73), preferably screws. In Figure 16, three positions of the height adjustment process of the adjustable tilting assembly (5) can be observed.

The tilting height adjustment drawer (28) of the adjustable tilting assembly (5) has compression springs (39) fixed in its structure through the compression spring supports (36). The compression springs (39) have the function of propelling the adjustable tilting assembly (5), which in turn, raises the folding platform assembly (6), serving as a propeller that assists in propelling the load for lifting. They also have the function of shock absorbers, since they absorb the impact in the process of lowering the adjustable tilting assembly (5).

The tilting height adjustment drawer (28) has lateral guides/limiters with rollers (38) allocated in axles (37) in its structure. These lateral guides/limiters with rollers (38) have the function of keeping the folding platform assembly (6) on the main structure of the drawer (35) without it exceeding the sides of the tilting height adjustment drawer (28) during and after the loading and unloading process as shown in Figures 22 and 23. In addition, these lateral guides/limiters with rollers (38) rotate, providing the rolling of the folding platform assembly (6) according to Figure 21.

The height adjustment of the adjustable tilting assembly (5) allows defining the position of the lateral guides/limiters with rollers (38) regarding their height, which allows, for example, using the equipment in various models of motor vehicles such as pick-up trucks with tailgates of different heights, closing the tailgate after loading the load, as shown in Figures 33 and 34. This height adjustment is performed by associating the tilting lifting frame (27) and the tilting height adjustment drawer (28).

The equipment in question has a propulsion system that allows the tilting of loads with substantial formats. As shown in Figure 21, the entire process of lifting the load occurs below the folding platform assembly (6) without the need for lateral arms, thus allowing the loading of various sizes of loads without conflicts with other parts of the equipment.

This propulsion system also allows the actuation of a single motor unit (1) to execute the loading and unloading process of the trolley assembly (7), the folding platform assembly (6) and the tilting of the adjustable tilting assembly (5).

When not in use, with the adjustable tilting assembly (5) coupled or not, the equipment can be folded and thus reduce the space it occupies, such as in the body of a pick-up truck, as shown in Figure 32, allowing the closing of the tailgate and the maritime canvas of the pick-up truck. The folding platform assembly (6) has a tubular structure of the platform (40) and the trolley profiles/guides (41) with platform hinges (43), which allows folding the folding platform assembly (6). In addition, the main drawer assembly (3) can be retracted, leaving the equipment in its compact form as shown in Figure 25.

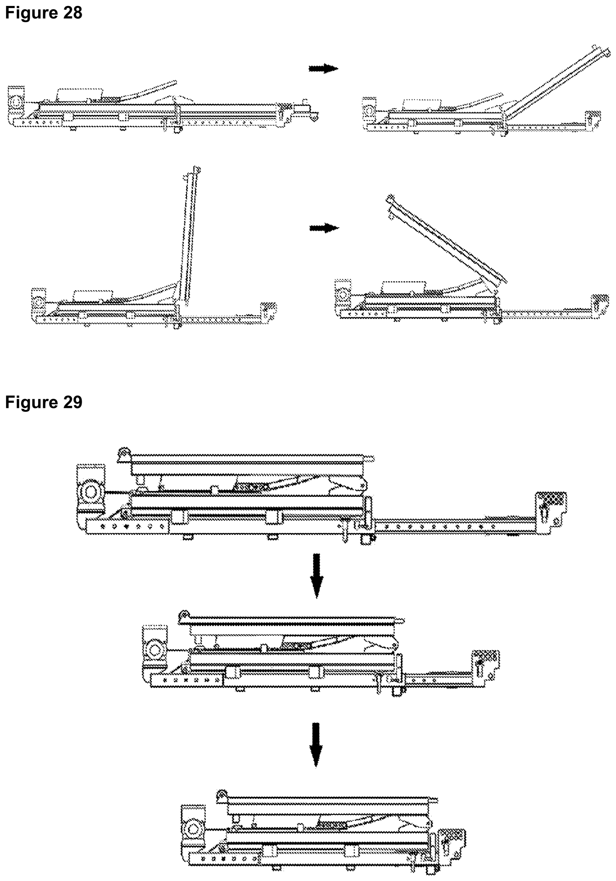

In Figure 28, the equipment without the adjustable tilting assembly (5) coupled and the folding movement of the folding platform assembly (6) can be observed. In sequence, Figure 29 demonstrates the closing movement of the main drawer assembly. In Figures 26 and 27, the equipment with the adjustable tilting assembly (5) coupled and the folding platform assembly (6) closed with the main drawer assembly (3) retracted can be observed from two different angles.

To use the equipment, the main drawer assembly (3) must be opened and adjusted according to the desired length. The folding platform assembly (6) must be opened and properly locked through the fixing housings of the folding platform (47) using fixing elements (73), preferably screws, thus keeping the folding platform assembly (6) open.

The equipment has an adjustable locking system for the folding platform assembly (6). The main drawer assembly (3) is composed of main platform guides (25), which in addition to serving as lateral guides in the loading and unloading process of the folding platform assembly (6), also have holes that allow an adjustment regarding the locking of the folding platform assembly (6) at substantially different heights in relation to the adjustable base assembly (2).

During the loading and unloading process, when the folding platform assembly (6) reaches the ground and reaches the end of its path through the adjustable base assembly (2) and the main drawer assembly (3), it must be locked. The locking is possible by allocating the locking pins (17) of the main drawer assembly (3) in the holes of the main platform guides (25). As these guides have more than one hole, it is possible to lock the folding platform assembly (6) in more than one angle, adjusting in the holes as needed.

In this way, the equipment can be allocated in places of different heights, such as in various models of motor vehicles with space for cargo or in benches and showcases, and still be locked ensuring the safe operation of the equipment.

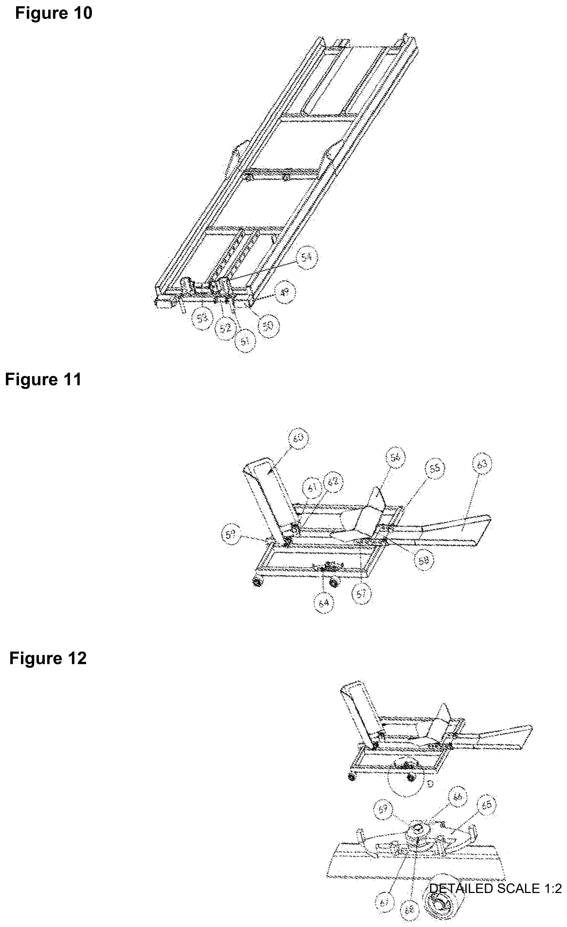

The said equipment has a trolley assembly (7) as shown in Figure 11, composed of a tubular structure of the trolley (55) with a traction element support (59). This assembly must be connected to the motor unit (1) through the traction element support (59) using a traction element (71), preferably a polyester strap. When the motor unit (1) is activated, the trolley assembly (7) will be pulled through the traction element (71) along the tubular structure of the platform (40) of the folding platform assembly (6) as shown in Figure 19.

The trolley assembly (7) has the purpose of allocating the tire of the motorcycle wheel. The access ramp (63) serves as a guide when pushing the motorcycle, leading the wheel/tire to the wheel lock articulator (56). This wheel articulator (56) has positions for allocating the tire (Figure 18) and to assist the tire fitting movement. The wheel articulator (56) has a shaft housing tube (58) that allows positioning the articulator in the position regulator (57).

The position adjustment of the wheel lock articulator (56) allows allocating various sizes of wheels/tires, so when allocating the tire in the articulator, and pushing it forward, it will be propelled until it reaches the folding front support (60). For such adjustment, the desired position of the wheel lock articulator (56) in the position regulator (57) must be chosen and secured with a fixing element (73), through the shaft housing tube (58).

The folding front support (60) has hinges of the front support (61) that are fixed to the hinge support (62) welded to the tubular structure of the trolley (55), with fixing elements (73), preferably screws. The hinges of the front support (61) and the hinge support (62) allow the folding front support (60), when the equipment is not in use, to be folded as shown in Figure 25.

The trolley assembly (7) also has an automatic lock (64) fixed to the tubular structure of the trolley (55) through the base of the lock (67) and the shaft of the lock (68) and the fixing element of the lock (69), preferably a screw. The automatic lock (64) has a compression spring (66) that provides movement to the locks with spring support (65). The shape of the locks with spring support (65) has a kind of hook, which when the trolley assembly (7) travels along the tubular structure of the platform (40) in the folding platform assembly (6), find and fix themselves in the positioners of the automatic lock (42).

The equipment also has the option of versatility in its use, removing the folding front support (60), the wheel lock articulator (56) and the access ramp (63) from the trolley assembly (7), it is possible to couple the attachable loading platform assembly (74), and thus load other types of loads with substantial sizes and formats, as shown in Figure 2.

In Figures 37 and 38, the attachable platform assembly (74) can be observed in detail. The assembly has a load base (75) that is allocated on the structural load frame (77). This structural frame has lateral grids (76) and lashing points (78) on the sides and on the front part that guarantee the safety in the loading and transport of the load. At the bottom of the structural load frame (77), the wheels of the structural frame (80) and the lower support roller (82) are located, which will assist in the upward and downward movement of the assembly.

At the rear of the structural load frame (77), fixed through the hinges of the climbing ramp (81), there is an articulated climbing ramp (79), which will facilitate the access of the load for allocation in the load base (75). The climbing ramp (79) has at its ends fixing points of the climbing ramp (90), which are threaded bushings and will serve to fix it through the climbing ramp fixing knobs (89) in the lateral grids (76).

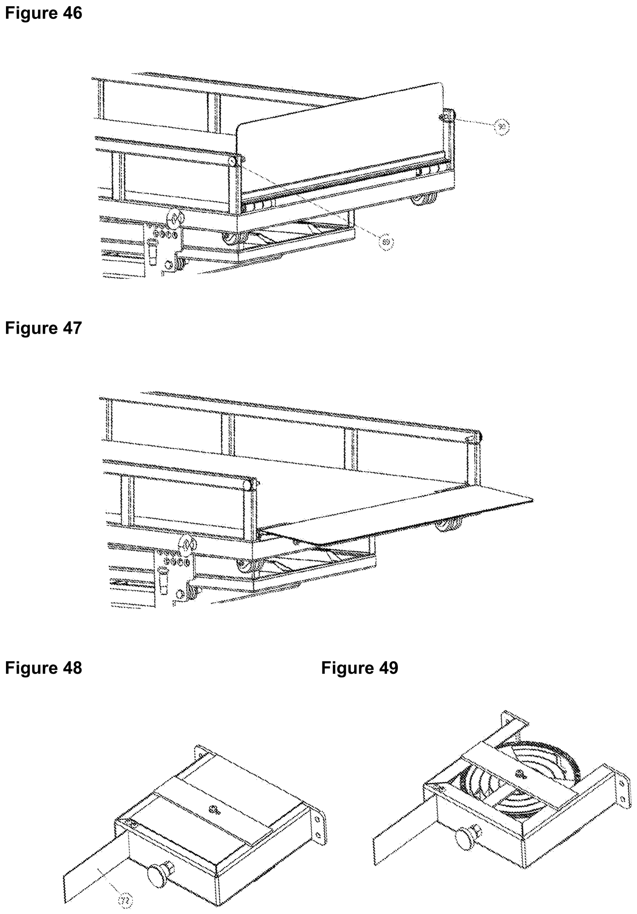

In this way, as shown in Figures 46 and 47, to load the load to be lifted, the climbing ramp fixing knob (89) is removed, thus allowing the climbing ramp (79) to be lowered and become an extension of the load base (75). After loading the load, the climbing ramp (79) must be positioned vertically and fixed again in the lateral grids (76) of the attachable loading platform assembly (74).

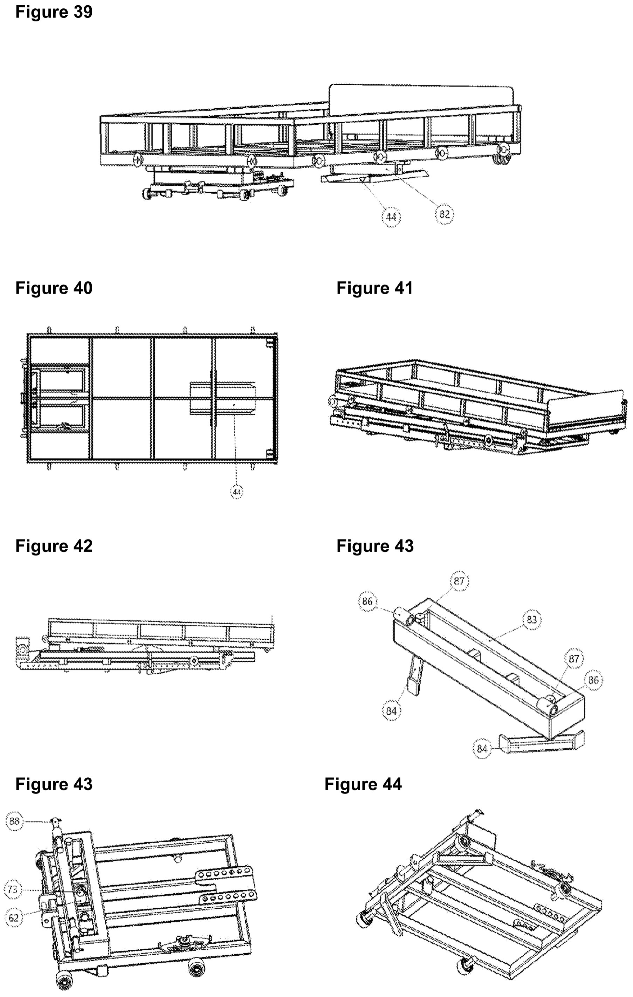

The coupling of the attachable loading platform assembly (74) to the equipment is possible with the use of the coupling frame (83). To ensure efficiency in the coupling and correct positioning, as shown in Figure 44, the coupling frame (83) is fixed to the hinge support (62) of the trolley assembly (7) using fixing elements (73).

As shown in Figure 43, the coupling frame (83) has movable coupling locks (84), which will be fitted and positioned in the trolley assembly (7), which must be properly tightened by locking with fixing/tightening elements (87), preferably screws. This frame has central bushings of the hinge (86) that will be fitted in the lateral bushings of the hinge (85) located in the lower front part of the structural load frame (77) and fixed with a shaft of the hinge (88).

After the coupling is completed, the attachable loading platform assembly (74) will be properly fixed in the trolley assembly (7), and the loading and unloading process will occur through the actuation of the motor unit (1). As shown in Figure 39, the attachable loading platform assembly (74), once the motor unit (1) is activated, will slide with the aid of the lower support roller (82) on the base of the rear tire (44) of the folding platform assembly (6) until the wheels of the structural frame (80) reach the ground and the trolley assembly (7) travels the entire extension of the folding platform assembly (6).

The present utility model also has an automated reversing system that allows part of the equipment to be ejected outwards in an automated way. As shown in Figure 17, this system uses a tension spring assembly (4), which is characterized by the use of a tape spring that exerts tension force as it is tensioned in the loading of the equipment, at the moment when the traction unit is activated in the downward direction, the tension of the spring causes a reverse force in the equipment causing the folding platform assembly (6) to be ejected automatically through the traction element of the spring assembly (72).

The tension spring assembly (4) is fixed in the main drawer assembly (3), one of the ends of the traction element of the spring assembly (72) is fixed in the tape spring support inside the spring assembly (4), as shown in Figure 49 and the other end is fixed in the traction element support of the spring assembly (52) in the folding platform assembly (6).

In this way, with the automated reversing system, the folding platform assembly (6) is ejected out of the equipment with the force of the tension spring assembly (4) automatically, without the need for application of human force during the loading and unloading process.

## Claims

1. "ADJUSTABLE AUTOMATED EQUIPMENT FOR LOADING MOTORCYCLES AND LOADS" **characterized by** consisting of a substantial adjustment system of the base with respect to its length to the available space (Figure 13).

2. "ADJUSTABLE AUTOMATED EQUIPMENT FOR LOADING MOTORCYCLES AND LOADS" according to claim 1, **characterized by** consisting of adjustable parts (Figure 4) between each other that make up the base and allow adjustment of its length (Figure 13).

3. "ADJUSTABLE AUTOMATED EQUIPMENT FOR LOADING MOTORCYCLES AND LOADS" according to claim 1, **characterized by** consisting of the drawer assembly with adjustment (Figure 5) that allows extending the length of the base (Figure 14).

4. "ADJUSTABLE AUTOMATED EQUIPMENT FOR LOADING MOTORCYCLES AND LOADS" according to claim 1, **characterized by** consisting of a platform (Figure 9), which when not in use, can be folded and thus reduce the space occupied by the equipment (Figure 25).

5. "ADJUSTABLE AUTOMATED EQUIPMENT FOR LOADING MOTORCYCLES AND LOADS" according to claim 1, **characterized by** consisting of a system that supports the weight of the load without supporting or depending on the cover when used in a pick-up or in places with limited space (Figure 30).

6. "ADJUSTABLE AUTOMATED EQUIPMENT FOR LOADING MOTORCYCLES AND LOADS" **characterized by** consisting of a trolley assembly (Figure 11) with automatic lock (64), with folding front support (60) and an access ramp (63).

7. "ADJUSTABLE AUTOMATED EQUIPMENT FOR LOADING MOTORCYCLES AND LOADS" according to claim 6, **characterized by** consisting of an attachable loading platform assembly (74).

8. "ADJUSTABLE AUTOMATED EQUIPMENT FOR LOADING MOTORCYCLES AND LOADS" **characterized by** consisting of a coupling system of the adjustable tilting assembly (5) to the adjustable base assembly (2).

9. "ADJUSTABLE AUTOMATED EQUIPMENT FOR LOADING MOTORCYCLES AND LOADS" **characterized by** consisting of a tilting system substantially adjustable in its height (Figure 16).

10. "ADJUSTABLE AUTOMATED EQUIPMENT FOR LOADING MOTORCYCLES AND LOADS" according to claim 9, **characterized by** consisting of a tilting assembly, which tilts part of the platform assembly (Figure 21).

11. "ADJUSTABLE AUTOMATED EQUIPMENT FOR LOADING MOTORCYCLES AND LOADS" according to claim 9, **characterized by** consisting of lateral guides/limiters (38).

12. "ADJUSTABLE AUTOMATED EQUIPMENT FOR LOADING MOTORCYCLES AND LOADS" **characterized by** consisting of a propulsion system (Figure 15) that enables the tilting of loads with substantial formats.

13. "ADJUSTABLE AUTOMATED EQUIPMENT FOR LOADING MOTORCYCLES AND LOADS" according to claim 12, **characterized by** consisting of compression springs (39).

14. "ADJUSTABLE AUTOMATED EQUIPMENT FOR LOADING MOTORCYCLES AND LOADS" according to claims 1 and 12, **characterized by** consisting of an adjustment system of the propulsion element (Figure 15).

15. "ADJUSTABLE AUTOMATED RAMP FOR LOADING OF MOTORCYCLES AND LOADS" **characterized by** consisting of an adjustable platform locking system.

16. "ADJUSTABLE AUTOMATED EQUIPMENT FOR LOADING MOTORCYCLES AND LOADS" **characterized by** consisting of an automated reversing system through the tension spring assembly (4).

## Amended claims

### Amended claims under Art. 19.1 PCT

1. ADJUSTABLE AUTOMATED EQUIPMENT FOR LOADING MOTORCYCLES AND CARGO, comprising an adjustable base assembly (2) having a support (20) for a motor unit (1) fixed by a fastening element (73), said base (2) having fixing points (91) for fixing to a surface; a main drawer assembly (3) having a structural cross member (23), fitting profiles (24) and guides (25); a trolley (7) having a tubular structure (55) with a support for the traction element (59), a traction element (71) connected to the motor unit (1); an access ramp (63) **characterized by** comprising:
a) the adjustable base assembly (2) having an adjustable frame for supporting the motor unit (18) with adjustment holes (22);
b) a base (10) with housings (11) fixed to the adjustable frame for supporting the motor unit (18) by means of fastening elements (73) arranged in the adjustment holes (22) and in the threaded bushing for adjusting the length of the base (12), said housings (11) for fitting profiles (24) of the main drawer assembly (3);
c) a foldable platform assembly (6) associated with the adjustable base assembly (2) and positioned on the main drawer assembly (3), said foldable platform assembly (6) having a tubular platform structure (40) and profiles/guides (41) with platform hinges (43).

2. ADJUSTABLE AUTOMATED EQUIPMENT FOR LOADING MOTORCYCLES AND CARGO, according to claim 1, **characterized by** comprising an adjustable tilting assembly (5) coupled to the adjustable base assembly (2) by means of terminals (30), said adjustable tilting assembly (5) having a tilting lifting frame (27) which includes a tubular lifting frame structure (29) having ends with terminals (30), locking holes (31) and housings (32), with a support (33) for a propulsion roller (34), a propulsion element (70) and a tilting height adjustment drawer (28).

3. ADJUSTABLE AUTOMATED EQUIPMENT FOR LOADING MOTORCYCLES AND CARGO, according to claim 2, **characterized in that** the tilting lifting frame (27) has housings (32) for fitting the main structure (35) of the tilting height adjustment drawer (28) through the adjustment holes (22) of the main drawer structure (35) and the locking holes (31) of the tubular lifting frame structure (29), using a fastening element (73), preferably screws.

4. ADJUSTABLE AUTOMATED EQUIPMENT FOR LOADING MOTORCYCLES AND CARGO, according to claim 2, **characterized in that** the tilting height adjustment drawer (28) has compression springs (39) fixed in supports (36) and lateral guides/limiters with rollers (38) allocated in shafts (37).

5. ADJUSTABLE AUTOMATED EQUIPMENT FOR LOADING MOTORCYCLES AND CARGO, according to claim 1, **characterized by** comprising a couplable load platform (74) having a load base (75), a structural load frame (77) with side grids (76) and with lashing points (78) on the sides and at the front, and a climbing ramp (79).

6. ADJUSTABLE AUTOMATED EQUIPMENT FOR LOADING MOTORCYCLES AND CARGOES, according to claim 1, **characterized in that** the foldable platform assembly (6) has foldable platform fixing housings (47) locked by fastening elements (73) and platform hinges (43).

7. ADJUSTABLE AUTOMATED EQUIPMENT FOR LOADING MOTORCYCLES AND CARGOES, according to claim 1, **characterized in that** the guides (25) of the main drawer assembly (3) have holes to accommodate locking pins (17).

8. ADJUSTABLE AUTOMATED EQUIPMENT FOR LOADING MOTORCYCLES AND CARGOES, according to claim 1, **characterized in that** it has a wheel lock articulator (56) with a shaft housing tube (58) that positions said articulator (56) in a position regulator (57).

9. ADJUSTABLE AUTOMATED EQUIPMENT FOR LOADING MOTORCYCLES AND CARGO, according to claim 1, **characterized in that** the trolley (7) has an automatic lock (64) fixed to the tubular structure (55), said automatic lock (64) provided with a compression spring (66) with a support (65) that is fixed in positioners (42) on the profiles/guides (41).

10. ADJUSTABLE AUTOMATED EQUIPMENT FOR LOADING MOTORCYCLES AND CARGO, according to claim 1, **characterized by** having a coupling frame (83) composed of central hinge bushings (86) and fastening/tightening elements (87) for securing the coupling locks (84), said coupling frame (83) fixed to the hinge support (62) of the trolley assembly (7) by means of fastening elements (73).
